# FASCICULE DE BREVET EUROPEEN

(11) **EP 2 338 225 B1**
(45) Date de publication et mention de la délivrance du brevet: **03.12.2014**
(21) Numéro de dépôt: 09783950.0
(22) Date de dépôt: 12.10.2009
(51) Int. Cl.: H02P 27/06, H02M 3/07

(54) **DISPOSITIF DE RECUPERATION D'ENERGIE DANS UN VARIATEUR DE VITESSE**
ENERGIEWIEDERGEWINNUNGSEINRICHTUNG IN EINEM ANTRIEB MIT VARIABLER FREQUENZ
ENERGY RECOVERY DEVICE IN A VARIABLE-FREQUENCY DRIVE

(30) Priorité: 21.10.2008 FR 0857141
(43) Date de publication de la demande: 29.06.2011
(73) Titulaire: Schneider Toshiba Inverter Europe SAS, 27120 Pacy sur Eure (FR)
(72) Inventeur: GRBOVIC, Petar, F-92506 Rueil Malmaison Cedex (FR); BAUDESSON, Philippe, F-27220 La Boissiere (FR); LE MOIGNE, Philippe, F-59310 Nomain (FR)
(74) Mandataire: Dufresne, Thierry
(86) Numéro de dépôt international: PCT/EP2009/063275
(87) Numéro de publication internationale: WO 2010/046262

(56) Documents cités:
- EP-A- 1 641 110
- US-A1- 2001 017 234
- US-A1- 2006 267 527

## Description

La présente invention se rapporte à un variateur de vitesse comportant un dispositif de récupération d'énergie intégrant un module de stockage de l'énergie récupérée. Un tel variateur est utilisé en particulier pour piloter un moteur électrique dans des applications ayant de fréquentes accélérations et décélérations comme les applications de levage ou les applications de régulation de position.

Un dispositif de récupération d'énergie sert habituellement à pouvoir stocker l'énergie quand le moteur est en mode freinage (ou mode récupération), puis à restituer l'énergie ainsi stockée quand le moteur est en mode entraînement, et éventuellement à fournir une énergie de secours en cas de brève disparition du réseau d'alimentation du variateur.

Des documents antérieurs tels que US6,742,630, US6,938,733, US2001017234, WO/2006/016002 ou EP1586527A1 proposent déjà des solutions de récupération d'énergie associées à un variateur de vitesse. Les topologies existantes sont généralement basées sur un convertisseur de puissance additionnel et un module de stockage d'énergie, dans lequel le convertisseur de puissance est relié en parallèle au bus continu de puissance du variateur de vitesse. Le module de stockage d'énergie comporte souvent un ou plusieurs "super-condensateurs" ou une combinaison d'un "super-condensateur" et d'une batterie. Le document EP1641110 A2 décrit un variateur de vitesse comportant un convertisseur continu/continu élévateur de tension, relié entre le bus continu et le condensateur de bus.

Le terme "super-condensateur" (super-capacitor) ou "ultra-condensateur" (ultra-capacitor) désigne un composant qui est capable de stocker une quantité d'énergie électrique plus importante qu'un condensateur classique, proche par exemple d'une batterie de type électrochimique, mais qui peut également admettre des courants de charge et décharge importants comme un condensateur classique, contrairement à une batterie de type électrochimique.

Dans le présent document, le terme "interrupteur actif" fait référence à un interrupteur qui est à commutation commandée à l'ouverture et/ou à la fermeture, tel qu'un transistor, un thyristor ou un triac. A l'inverse, le terme "interrupteur passif" fait référence à un interrupteur qui est à commutation spontanée, tel qu'une diode.

Les solutions existantes ne permettent pas d'amplifier (ou booster) la tension de bus continu à une valeur supérieure à la tension fournie en sortie de redresseur par le réseau d'alimentation du variateur. De même, la tension de bus continu ne peut pas être régulée pour diminuer les oscillations de la tension de bus continu de façon à réduire le taux de distorsion des courants moteur et donc l'ondulation de couple lorsque la tension appliquée en sortie de l'onduleur est maximale. De plus, le courant absorbé par le redresseur ne peut pas avoir un taux de distorsion harmonique totale en courant (THDI) en dessous de 30%. Par ailleurs, le facteur d'utilisation des interrupteurs utilisés dans le dispositif de récupération d'énergie n'est pas optimisé.

L'objectif de l'invention est donc de proposer un variateur de vitesse comportant un dispositif de récupération d'énergie pour économiser l'énergie, améliorer les performances du variateur et ne présentant pas les inconvénients ci-dessus. En particulier, le dispositif de récupération d'énergie doit notamment permettre de :
- récupérer et stocker de l'énergie électrique lorsque le variateur de vitesse fonctionne en mode freinage et restituer au variateur cette énergie électrique stockée.
- réduire à environ 30% le taux de distorsion harmonique totale en courant (THDI) sur les phases du réseau d'alimentation en entrée du variateur.
- supprimer les variations de cette tension de bus continu (fonction ripple free) au niveau de la fréquence réseau (environ 50 Hz), malgré les perturbations éventuelles du réseau d'alimentation externe, même dans le cas d'un variateur ne comportant pas de condensateur de bus (C-less topology). Une régulation de la tension du bus continu permet notamment d'avoir un meilleur contrôle du couple et du flux du moteur.
- augmenter si nécessaire la tension délivrée par le module redresseur du variateur (fonction boost) pour fournir la tension du bus continu, ce qui permet d'avoir une réserve d'énergie. Cette augmentation est représentée par le facteur d'amplification qui est le ratio entre la tension du bus continu et la tension en sortie du module redresseur.

Pour cela, l'invention décrit un variateur de vitesse comprenant un bus continu d'alimentation de puissance doté d'une ligne positive et d'une ligne négative, et un module onduleur alimenté par le bus continu pour fournir une tension variable à une charge électrique. Le variateur comporte un premier convertisseur continu/continu comprenant des bornes d'entrée et des bornes de sortie, les bornes de sortie du premier convertisseur étant connectées en série sur la ligne positive du bus continu, un second convertisseur continu/continu comprenant des bornes d'entrée, des premières bornes de sortie et des secondes bornes de sortie, les bornes d'entrée du second convertisseur étant connectées entre la ligne positive et la ligne négative du bus continu, une capacité de filtrage qui est connectée en parallèle aux bornes d'entrée du premier convertisseur et aux premières bornes de sortie du second convertisseur, et un module de stockage d'énergie électrique qui est connecté en parallèle aux secondes bornes de sortie du second convertisseur.

Selon une caractéristique, le module de stockage d'énergie électrique comporte un ou plusieurs super-condensateurs, ou le module de stockage d'énergie électrique comporte un ou plusieurs super-condensateurs en série avec une inductance de filtrage.

Selon une autre caractéristique, le premier convertisseur continu/continu est un convertisseur monodirectionnel non-isolé qui comporte un interrupteur actif et un interrupteur passif. L'interrupteur passif du premier convertisseur est une diode qui est connectée entre les bornes de sortie du premier convertisseur, et l'ensemble formé par l'interrupteur actif et l'interrupteur passif reliés en série est connecté en parallèle aux bornes d'entrée du premier convertisseur.

Selon une autre caractéristique, le second convertisseur continu/continu est un convertisseur bidirectionnel non-isolé qui comporte une cellule composée de quatre interrupteurs actifs reliés en série entre la ligne positive et la ligne négative du bus continu, la cellule comprenant un point milieu central entre le deuxième et le troisième interrupteur actif, un point milieu haut entre le troisième et le quatrième interrupteur actif, un point milieu bas entre le premier et le deuxième interrupteur actif.

La ligne positive du bus continu et le point milieu central forment les premières bornes de sortie du second convertisseur, et le point milieu haut et le point milieu bas forment les secondes bornes de sortie du second convertisseur.

Selon une autre caractéristique, le second convertisseur continu/continu comporte également deux diodes de contrôle de tension montées en série entre la ligne positive du bus continu et le point milieu central, ainsi qu'une capacité de charge reliée en série entre le point milieu bas et un point milieu des deux diodes de contrôle de tension.

Selon une autre caractéristique, le variateur comporte également un ensemble de filtrage relié entre la ligne positive et la ligne négative du bus continu, l'ensemble de filtrage étant composé de deux capacités de bus reliées en série et une des deux capacités de l'ensemble de filtrage correspondant à la capacité de filtrage.

Avantageusement, l'invention décrit une solution qui utilise un super-condensateur, comme module de stockage d'énergie, dont la tension minimale à ses bornes n'est pas directement liée au facteur d'amplification souhaité (fonction boost). En effet, lorsque la tension aux bornes du super-condensateur influe sur le facteur d'amplification, alors cette tension doit avoir, en mode de fonctionnement normal (mode moteur), une valeur minimale suffisante pour respecter ce facteur d'amplification. Or, en mode freinage de la charge et en mode restitution d'énergie, la tension aux bornes du super-condensateur augmente jusqu'à généralement environ deux fois cette valeur minimale de tension. Cela entraîne que les composants, notamment les interrupteurs actifs, doivent donc être dimensionnés pour supporter des valeurs élevées de tension et il s'en suit des coûts importants pour les composants utilisés dans un tel dispositif.

D'autres caractéristiques et avantages vont apparaître dans la description détaillée qui suit en se référant à un mode de réalisation donné à titre d'exemple et représenté par les dessins annexés sur lesquels :
- la figure 1 montre un exemple simplifié de l'architecture d'un variateur de vitesse conforme à l'invention,
- la figure 2 détaille un mode de réalisation préféré du premier convertisseur continu/continu,
- la figure 3 montre un premier mode de réalisation du second convertisseur continu/continu,
- la figure 4 montre un second mode de réalisation du second convertisseur continu/continu,
- la figure 5 représente un diagramme de la tension de bus continu et de la tension redressée,
- les figures 6a à 6d illustrent les différents modes de fonctionnement du variateur,
- la figure 7 détaille une variante de l'architecture de la figure 1,
- la figure 8 montre un exemple de synoptique de commande des interrupteurs actifs du second convertisseur continu/continu.

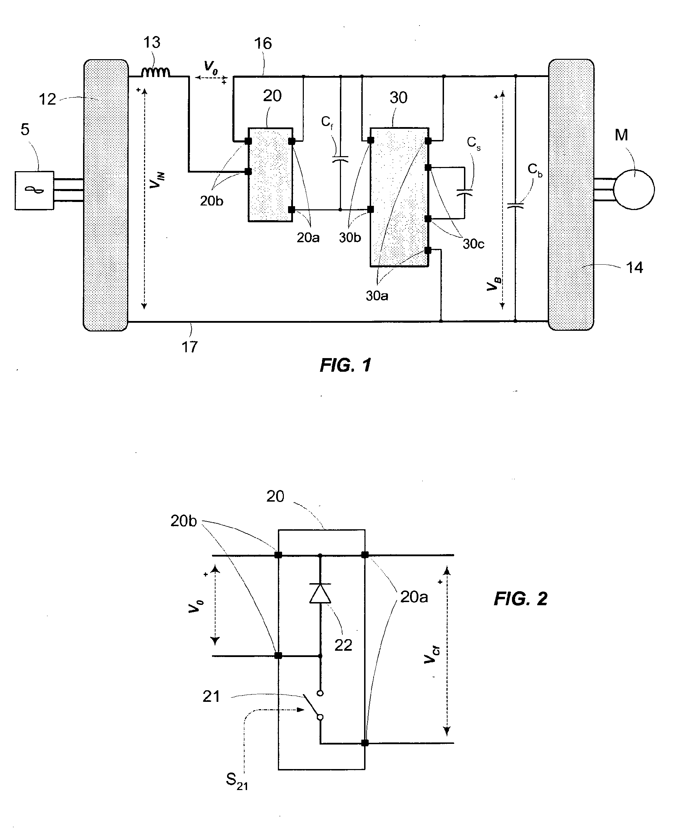

En référence à la figure 1, un variateur de vitesse, de type convertisseur de fréquence, est alimenté par un réseau extérieur d'alimentation 5 triphasé. Le variateur comporte un module redresseur 12 délivrant en sortie une tension redressée V_{IN} qui est destinée à former un bus continu d'alimentation de puissance composé d'une ligne positive 16 et d'une ligne négative 17. Préférentiellement, le module redresseur 12 utilise des diodes et ne nécessite pas de thyristors. On pourrait aussi envisager que la tension redressée V_{IN} provienne directement d'une source d'alimentation continue extérieure, sans nécessiter de module redresseur 12. De préférence, une inductance de filtrage 13 supplémentaire de faible valeur est placée en série, en sortie de la borne positive du module redresseur 12.

Le variateur comporte ensuite un module onduleur 14 alimenté par le bus continu et délivrant une tension variable à une charge électrique extérieure M, en particulier un moteur électrique synchrone ou asynchrone. Un tel module onduleur 14 comporte habituellement des transistors de puissance qui sont pilotés par des signaux de commande provenant d'une unité de commande du variateur de vitesse (non représentée sur les figures). Le variateur comporte aussi généralement un condensateur de bus C_{B} connecté entre les lignes positive 16 et négative 17 du bus continu, par exemple du côté du module onduleur 14. La tension continue aux bornes de ce condensateur de bus C_{B} est appelée tension de bus V_{B}.

Le variateur comporte un dispositif de récupération d'énergie destiné à récupérer et stocker de l'énergie électrique lorsque la charge électrique M devient entraînante (freinage moteur) et destiné ensuite à restituer l'énergie électrique stockée. Selon l'invention, le dispositif de récupération d'énergie comporte un premier convertisseur continu/continu (ou convertisseur DC/DC) 20, un second convertisseur continu/continu (ou convertisseur DC/DC) 30, une capacité de filtrage Cf et un module de stockage de l'énergie électrique Cs.

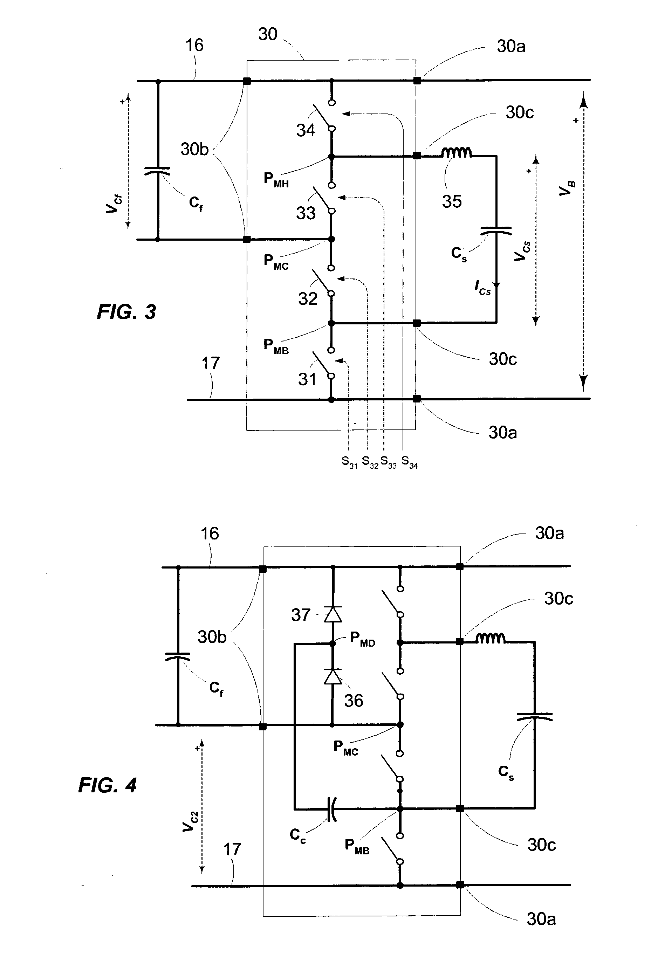

En référence à la figure 2, le premier convertisseur continu/continu 20 comprend un étage d'entrée formé par deux bornes d'entrée 20a et un étage de sortie formé par deux bornes de sortie 20b. En référence aux figures 3 et 4, le second convertisseur continu/continu 30 comprend un étage d'entrée formé par deux bornes d'entrée 30a, un premier étage de sortie formé par deux premières bornes de sortie 30a et un second étage de sortie formé par deux secondes bornes de sortie 30b.

L'étage de sortie 20b du premier convertisseur 20 est relié en série sur la ligne positive 16 bus continu, entre l'inductance de filtrage 13 et le condensateur de bus C_{B}. Une des bornes de sortie 20b est reliée à l'inductance de filtrage 13 ou à la sortie positive du module redresseur 14, s'il n'y a pas d'inductance 13. L'autre borne de sortie 20b est reliée au condensateur de bus C_{B}. Il existe une tension V₀ entre les deux bornes 20b, de telle sorte que : V_{B} = V_{IN} + V₀, en ne tenant pas compte de la tension aux bornes de l'inductance 13. Les bornes d'entrée 20a du premier convertisseur 20 sont connectées en parallèle de la capacité de filtrage Cf.

Préférentiellement, le premier convertisseur 20 est un simple convertisseur continu/continu monodirectionnel non-isolé comme indiqué en figure 2. Il reçoit en entrée une tension Vf de la capacité de filtrage Cf et délivre en sortie la tension V₀ sur la ligne positive 16 du bus continu. Le premier convertisseur 20 comprend simplement un interrupteur passif 22 en série avec un interrupteur actif 21. L'interrupteur actif est par exemple un transistor de puissance 21 de type IGBT, MOSFET ou autre, et l'interrupteur passif est une diode 22 dont l'anode est placée du côté de l'interrupteur actif 21. Le transistor de puissance 21 est piloté par un signal de commande S₂₁ provenant de l'unité de commande du variateur de vitesse. Le signal de commande S₂₁ est un signal à modulation de large d'impulsion (PWM - Pulse Width Modulation) qui permet notamment de faire varier la tension de sortie V₀ du premier convertisseur 20.

L'étage de sortie 20b du premier convertisseur 20 est directement connecté aux bornes de la diode 22, et l'étage d'entrée 20a du premier convertisseur 20 est directement connecté aux bornes de l'ensemble formé par le transistor de puissance 21 et la diode 22 reliés en série. La diode 22 est donc reliée en série sur la ligne positive 16 du bus continu et la tension V_{D} aux bornes de la diode 22 est égale à la tension de sortie V₀ du premier convertisseur 20.

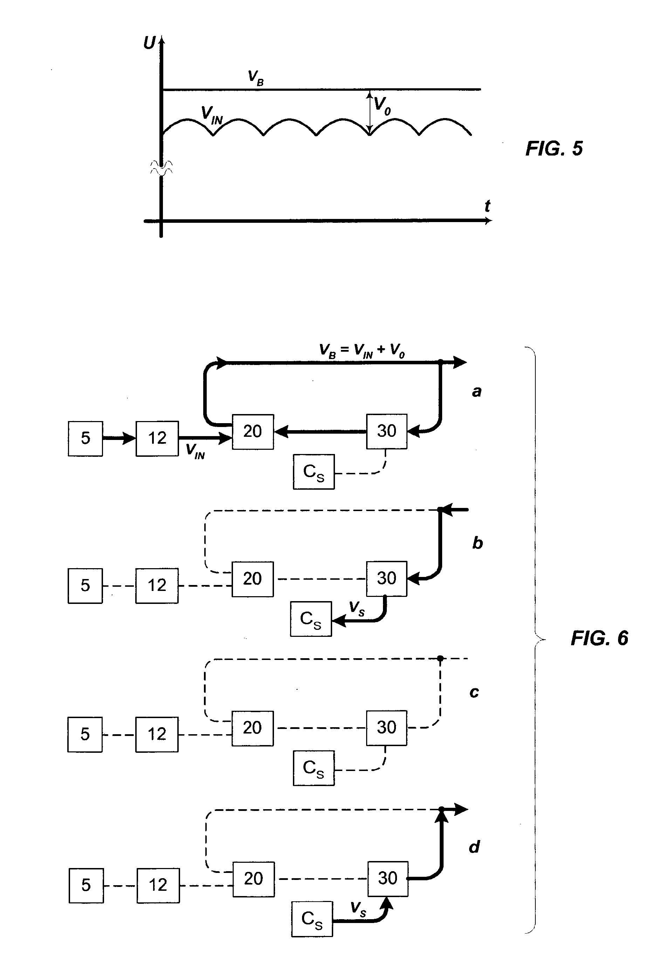

Lorsque le transistor de puissance 21 est ouvert (état OFF), alors le courant du bus continu circule dans la diode 22. La tension V_{D} aux bornes de la diode est donc nulle, donc V₀ = 0 et V_{B} = V_{IN}. Lorsque le transistor de puissance 21 est fermé (état ON), le courant circule dans le transistor 21 et la tension V_{D} devient alors égale à la tension de la capacité de filtrage Cf, appelée Vc_{f}, donc V_{B} = V_{IN} + Vc_{f}. La tension de sortie V₀ varie donc entre 0 et V_{f} et est toujours positive ou nulle. Ainsi, en agissant sur le signal de commande S₂₁ du transistor de puissance 21, il est possible de réguler et de booster la tension du bus continu V_{B} et le courant circulant dans l'inductance 13, comme indiqué dans la figure 5, à l'aide de la tension Vc_{f}.

La capacité de filtrage Cf peut être n'importe quel type de condensateur. Elle est connectée en parallèle aux bornes d'entrée 20a du premier convertisseur 20 et en parallèle aux premières bornes de sortie 30b du second convertisseur 30. De plus, une des extrémités de la capacité de filtrage Cf est reliée à la ligne positive 16 du bus continu. Ainsi, les bornes d'entrée 20a du premier convertisseur 20 sont directement connectées aux premières bornes de sortie 30b du second convertisseur 30. Cette capacité de filtrage Cf sert notamment de source de potentiel entre le premier convertisseur 20 et le second convertisseur 30.

En référence aux figures 3 et 4, le second convertisseur 30 est un convertisseur continu/continu bidirectionnel qui est non isolé. On pourrait cependant utiliser aussi un convertisseur continu/continu bidirectionnel isolé. Les bornes d'entrée 30a du second convertisseur 30 sont connectées entre la ligne positive 16 et la ligne négative 17 du bus continu, en aval du premier convertisseur 20, c'est-à-dire entre le premier convertisseur 20 et le module onduleur 14. Il reçoit donc en entrée la tension V_{B} du bus continu. Les premières bornes de sortie 30b du second convertisseur 30 sont connectées à la capacité de filtrage Cf et aux bornes d'entrée 20a du premier convertisseur 20, comme indiqué précédemment.

Les secondes bornes de sortie 30c du second convertisseur 30 sont connectées au module de stockage d'énergie électrique Cs. Le second convertisseur 30 délivre donc en sortie une tension au module de stockage Cs, appelée VC_{S}. Le module de stockage comporte par exemple un super-condensateur Cs ou plusieurs super-condensateurs en série, de façon à permettre le stockage d'une grande quantité d'énergie électrique et à permettre des courants élevés de charge/décharge. Le module de stockage pourrait également comporter d'autres éléments de stockage tels qu'une batterie, un volant inertiel (flywheel) ou un stockeur d'énergie magnétique supraconductrice (SMES).

Dans l'exemple des figures 3 et 4, le module de stockage comprend en plus une inductance de filtrage 35 reliée en série avec le super-condensateur Cs. Cette inductance de filtrage 35 permet notamment de limiter la variation du courant circulant dans le super-condensateur Cs, dues aux commutations fréquentes dans le second convertisseur 30 durant la charge ou la décharge du super-condensateur Cs. De plus, l'inductance 35 permet, pour les hautes fréquences (de l'ordre de la dizaine de KHz, par exemple), de transformer le super-condensateur Cs d'une source de tension en une source de courant.

La figure 3 montre un premier mode de réalisation du second convertisseur 30. Il comprend une cellule de commutation composée de quatre interrupteurs actifs 31, 32, 33, 34 qui sont connectés les uns aux autres en série entre la ligne positive 16 et la ligne négative 17 du bus continu. Le premier interrupteur 31 est raccordé entre la ligne négative 17 et le second interrupteur 32. Le second interrupteur 32 est relié au troisième interrupteur 33 et le quatrième interrupteur 34 est raccordé entre le troisième interrupteur 33 et la ligne positive 16 du bus continu.

De façon préférée, les interrupteurs actifs 31, 32, 33, 34 sont des interrupteurs de courant bidirectionnels tels que des transistors de puissance de type IGBT, MOSFET ou JFET, dotés chacun d'une diode de roue libre en parallèle (non représentées sur les figures). Les interrupteurs actifs 31, respectivement 32, 33, 34 sont pilotés par des signaux de commande S₃₁, respectivement S₃₂, S₃₃, S₃₄ provenant de l'unité de commande du variateur de vitesse. Les signaux de commande S₃₁, S₃₂, S₃₃, S₃₄ sont par exemple des signaux à modulation de large d'impulsion (PWM).

Les quatre interrupteurs actifs 31, 32, 33, 34 forment entre eux plusieurs points de connexion intermédiaires, comme indiqué en figure 3. Un point milieu central P_{MC} est positionné entre le second interrupteur 32 et le troisième interrupteur 33, au milieu de la cellule de commutation. Un point milieu bas P_{MB} est positionné entre le premier interrupteur 31 et le second interrupteur 32, et un point milieu haut P_{MH} est positionné entre le troisième interrupteur 33 et le quatrième interrupteur 34.

La ligne positive 16 du bus continu et le point milieu central P_{MC} de la cellule de commutation forment les premières bornes de sortie 30b du second convertisseur 30. Le point milieu haut P_{MH} et le point milieu bas P_{MB} de la cellule de commutation forment les secondes bornes de sortie 30c du second convertisseur 30. Ainsi, les deux secondes bornes de sortie 30c sont reliées au bus continu via les interrupteurs 31 et 34.

Ce mode de réalisation simple du second convertisseur 30 présente l'avantage d'être très économique et de ne pas utiliser de composants passifs, tout en régulant les tensions de sortie Vc_{f} et Vcₛ par rapport à la tension de bus Vb, en jouant sur la commande des quatre interrupteurs actifs 31, 32, 33, 34. Les tensions Vc_{f} et Vcₛ sont néanmoins couplées entre elles ce qui a pour conséquence que le courant traversant le super-condensateur Cs contient une composante alternative à fréquence moyenne (entre 1 à 5 kHz environ) dont l'amplitude dépend du facteur d'amplification du premier convertisseur 20. Ceci peut créer des pertes additionnelles dans le super-condensateur Cs et donc réduire l'efficacité du dispositif de récupération d'énergie. Cependant, ce désavantage deviendra mineur avec les progrès rapides des technologies des super-condensateurs.

Les différents cas de fonctionnement du dispositif de récupération d'énergie sont illustrés dans les figures 6a à 6d :
- Le mode normal de fonctionnement (fig 6a - mode moteur) correspond à un mode où le variateur est alimenté par le réseau extérieur 5, via le redresseur 12, et utilise l'énergie fournie par le réseau 5 pour alimenter et entraîner la charge M. La tension de bus V_{B} est maintenu constante et supérieure à la tension redressée V_{IN} grâce à l'apport de la tension V₀ en sortie du premier convertisseur 20. Comme indiqué en figure 5, la tension V₀ a donc pour rôle d'augmenter la tension redressée V_{IN} du module redresseur 12 (fonction boost) et d'annuler les ondulations de la tension redressée V_{IN} (fonction ripple-free). Une autre fonction importante du premier convertisseur 20 est de maintenir pratiquement constant le courant circulant dans l'inductance 13, malgré d'éventuelles variations de la tension d'alimentation du réseau extérieur 5. Dans ce mode, il n'y a pas d'échange d'énergie entre le super-condensateur Cₛ et le variateur. La tension V_{cf} est régulée par le second convertisseur 30 (à l'aide des signaux de commande S₃₁, S₃₂, S₃₃, S₃₄) à une valeur qui est par exemple la moitié de la tension de bus V_{B}.
- La figure 6b correspond au mode freinage, dans lequel le variateur récupère et stocke l'énergie électrique fournie par la charge M lorsque celle-ci est entraînante (comme un moteur d'ascenseur en phase de descente). Cette énergie de freinage récupérée permet de charger le super-condensateur Cₛ. Le second convertisseur 30 a pour rôle de réguler la tension de bus V_{B} et d'augmenter la tension Vc_{S} aux bornes du super-condensateur C_{S}. Dans ce mode, le signal de commande S₂₁ maintient l'interrupteur actif 21 à l'état ouvert.
- La figure 6c correspond à un mode où aucune énergie n'est consommée ou récupérée par la charge M (mode stand-by).
- La figure 6d correspond au mode restitution, dans lequel l'énergie emmagasinée dans le super-condensateur Cs durant le mode freinage est restituée au variateur grâce au second convertisseur 30. Dans ce mode, l'énergie stockée dans le super-condensateur Cₛ est renvoyée vers la charge M et la tension Vcₛ diminue donc jusqu'à atteindre la valeur minimale Vc_{Smin}. Dans ce mode, le signal de commande S₂₁ maintient l'interrupteur actif 21 à l'état ouvert. Lorsque la tension Vc_{S} atteint la valeur minimale Vc_{Smin}, la charge M doit de nouveau être alimentée à partir du réseau extérieur 5 et le variateur repasse donc dans le mode de fonctionnement normal 6a.

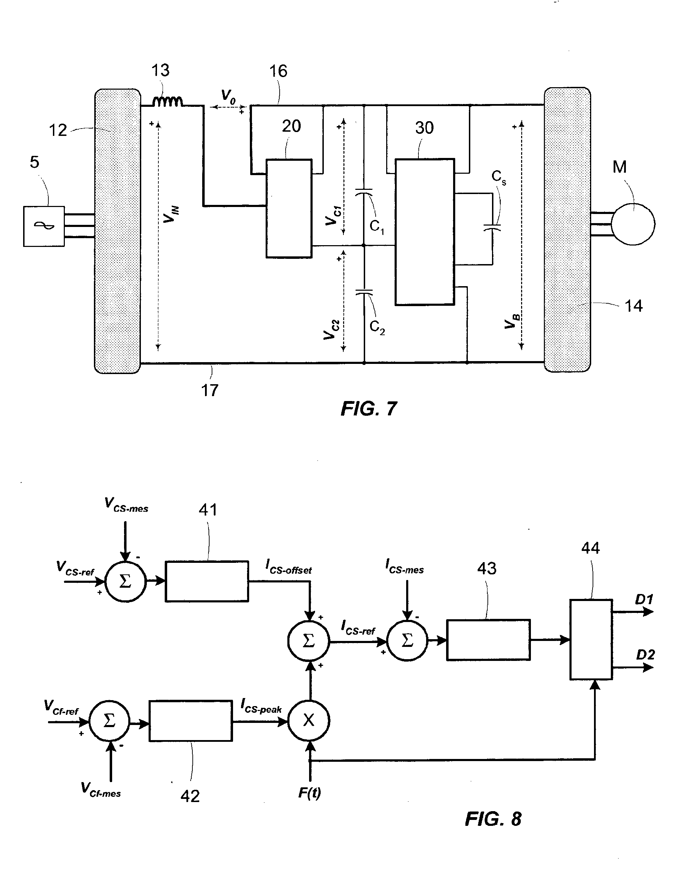

Dans le premier mode de réalisation (figure 3), les tensions Vc_{f} et Vcₛ sont couplées entre elles, comme indiqué précédemment. La figure 8 montre un exemple de synoptique de l'algorithme de commande/régulation des tensions Vc_{f} et Vcₛ exécuté dans l'unité de commande du variateur de vitesse, qui permet de générer les signaux de commande des quatre interrupteurs actifs du second convertisseur 30.

Un premier bloc de commande 41 reçoit en entrée l'écart entre une consigne de référence Vc_{S-ref} de la tension Vc_{S}, et une mesure Vc_{S-mes} de cette tension Vc_{S}. Pour minimiser cet écart, la sortie du premier bloc de commande 41 fournit une évaluation de la composante continue Ic_{S-offset} du courant Ic_{S} circulant dans le module de stockage Cs. Ce courant Ic_{S-offset} correspond à la valeur moyenne du courant Ic_{S}. Le courant Ic_{S-offset} est nul durant le mode moteur, est positif durant le mode freinage (charge de Cs) et est négatif durant le mode restitution (décharge de Cs).

Un deuxième bloc de commande 42 reçoit en entrée l'écart entre une consigne de référence Vc_{f-ref} de la tension Vc_{f}, et une mesure Vc_{f-mes} de cette tension Vc_{f}. Pour minimiser cet écart, la sortie du deuxième bloc de commande 42 fournit une évaluation du courant crête Ic_{S-peak} de la composante alternative du courant Ic_{S} circulant dans le module de stockage Cs. Ce courant crête Ic_{S-peak} doit être positif en mode moteur pour agir sur le courant circulant dans la capacité de filtrage Cf et donc de façon à pouvoir réguler la tension Vc_{f}. Le courant Ic_{S-peak} est nul en mode freinage et restitution.

Le courant Ic_{S-peak} est ensuite multiplié par une fonction F(t), qui est par exemple la fonction simple carrée F(t) = sgn(sin2Πft), où f représente la fréquence de la composante alternative du courant lc_{S} et sgn(x) est égal à 1 si x>0 et est égal à -1 si x<0.

La somme (lc_{S-peak} * sgn(sin2Πft)) + lc_{S-offset} fournit alors la consigne de référence Ic_{S-ref} du courant Ic_{S}. Un troisième bloc de commande 43 reçoit en entrée l'écart entre cette consigne de référence Ic_{S-ref} et une mesure Ic_{S-mes} du courant Ic_{S}. La sortie du troisième bloc de commande 43 est ensuite utilisée dans un quatrième bloc de commande 44 dont la fonction est de générer les signaux de commande des quatre interrupteurs actifs 31, 32, 33, 34, grâce à des variables de sortie D1 et D2.

Dans le premier mode de réalisation (figure 3), il n'y a que deux états possibles pour l'ensemble formé par les deux premiers interrupteurs (premier interrupteur 31 et deuxième interrupteur 32), sur une période de commutation des interrupteurs actifs, notamment en raison des diodes de roue libre des interrupteurs. Ces deux états sont soit l'état A : interrupteur 31 ouvert (OFF) et interrupteur 32 fermé (ON), soit l'inverse c'est-à-dire l'état B : interrupteur 31 fermé et interrupteur 32 ouvert. De même, sur la période de commutation, il n'y a que deux états possibles pour l'ensemble formé par les deux derniers interrupteurs (troisième interrupteur 33 et quatrième interrupteur 34), à savoir soit l'état A : interrupteur 33 ouvert et interrupteur 34 fermé, soit l'état B : interrupteur 33 fermé et interrupteur 34 ouvert.

La variable D1, respectivement D2, représente le pourcentage de temps durant lequel les deux premiers interrupteurs 31, 32, respectivement les deux derniers interrupteurs 33, 34, sont à l'état A. Par exemple, si D1 = 40%, cela signifie que durant 40% du temps de la période de commutation, les deux premiers interrupteurs 31, 32 sont à l'état A et durant les 60% du temps restant, les deux premiers interrupteurs 31, 32 sont à l'état B. Ces deux variables D1 et D2 permettent donc de commander de façon simple les quatre interrupteurs actifs du second convertisseur 30.

La figure 4 montre un second mode de réalisation du second convertisseur 30 dans lequel on rajoute un bras supplémentaire entre le point milieu central P_{MC} du second convertisseur 30 et la ligne positive 16 du bus continu. Ce bras supplémentaire comporte deux diodes de contrôle de tension 36, 37 reliées en série, les anodes des diodes 36, 37 étant positionnées vers le point milieu central P_{MC} et un condensateur de charge C_{c}. Ce condensateur C_{c} est connecté entre le point milieu bas P_{MB} du second convertisseur 30 et un point de connexion milieu P_{MD} des diodes, c'est-à-dire entre les diodes 36, 37.

Ce bras supplémentaire permet de découpler les tensions Vc_{f} et Vc_{S} l'une de l'autre, ce qui permet de simplifier la régulation de la tension Vc_{f}. En effet, le second convertisseur 30 présente désormais un premier bloc destiné à la commande de la tension Vc_{f} durant le mode normal de fonctionnement moteur. Ce premier bloc est connecté aux premières bornes de sortie 30b et comprend les interrupteurs 31 et 32, le condensateur C_{c} et les diodes 36 et 37. Le second convertisseur 30 présente aussi un second bloc destiné à la commande de la tension Vc_{S} durant les modes de récupération et de restitution de l'énergie du module de stockage Cs. Ce second bloc est connecté aux secondes bornes de sortie 30c et comprend les interrupteurs 31, 32, 33 et 34.

Durant le mode moteur, le troisième interrupteur 33 et le quatrième interrupteur 34 restent ouverts car il n'y a pas d'échange d'énergie avec le super-condensateur C_{S}. Lorsque le premier interrupteur 31 est fermé et le second interrupteur 32 est ouvert, alors le condensateur de charge C_{c} est chargé par la tension Vc₂ entre le point milieu central P_{MC} et la ligne négative 17 à travers la diode 36. Puis, lorsque le premier interrupteur 31 est ouvert et le second interrupteur 32 est fermé, le condensateur de charge C_{c} est déchargé sur la tension Vc_{f} à travers la diode 37. Cela permet ainsi de réguler facilement la tension Vc_{f} à une valeur moyenne qui est par exemple la moitié de la tension de bus : Vc_{f} = Vc₂ = ½ V_{B}. Ainsi la tension Vc_{f} est maintenue constante quel que soit le courant qui est injecté sur le bus continu par le premier convertisseur 20 et est découplée de la tension Vc_{S} du module de stockage Cs.

Durant les modes freinage et restitution, les quatre interrupteurs actifs 31, 32, 33, 34 sont utilisés. L'unité de commande du variateur génère les signaux de commande S₃₁, S₃₂, S₃₃, S₃₄ pour fournir les séquences d'ouverture/fermeture des quatre interrupteurs, ces séquences dépendant du ratio entre la tension de bus V_{B} et la tension Vc_{S} et étant choisies pour minimiser les ondulations de la tension Vc_{S}.

Ainsi, le mode de réalisation de la figure 4 nécessite l'adjonction du bras supplémentaire mais simplifie la commande des interrupteurs 31, 32, 33, 34 en découplant Vc_{f} et Vc_{S}.

La variante de la figure 7 montre un ensemble de filtrage qui est connecté entre la ligne positive 16 et ligne négative 17 et qui est composé de deux capacités C₁, C₂ raccordées en série. Le point milieu central P_{MC} est relié au point milieu entre les deux capacités C₁, C₂. Avantageusement, cet ensemble de filtrage C₁, C₂ remplace la capacité de bus C_{B} et la capacité C₁ est en réalité la capacité de filtrage Cf précédemment décrite. Ainsi, il est possible de supprimer la capacité de bus C_{B} en n'ajoutant qu'une capacité de taille inférieure C₂ entre le point milieu central P_{MC} et ligne négative 17, ce qui est avantageux en termes de coût et d'encombrement.

Par ailleurs, l'architecture proposée par l'invention permet également de se prémunir contre de courtes interruptions du réseau extérieur 5, en autorisant dans ce cas une décharge plus importante du super-condensateur C_{S} de façon à pouvoir maintenir l'alimentation de la charge M.

## Revendications

1. Variateur de vitesse comprenant un bus continu d'alimentation de puissance doté d'une ligne positive (16) et d'une ligne négative (17), et un module onduleur (14) alimenté par le bus continu pour fournir une tension variable à une charge électrique (M), **caractérisé en ce que** le variateur comporte :
- un premier convertisseur continu/continu (20) comprenant des bornes d'entrée (20a) et des bornes de sortie (20b), les bornes de sortie (20b) du premier convertisseur (20) étant connectées en série sur la ligne positive (16) du bus continu,
- un second convertisseur continu/continu (30) comprenant des bornes d'entrée (30a), des premières bornes de sortie (30b) et des secondes bornes de sortie (30c), les bornes d'entrée (30a) du second convertisseur (30) étant connectées entre la ligne positive (16) et la ligne négative (17) du bus continu,
- une capacité de filtrage (Cf) qui est connectée en parallèle aux bornes d'entrée (20a) du premier convertisseur (20) et aux premières bornes de sortie (30b) du second convertisseur (30),
- un module de stockage d'énergie électrique (Cs) qui est connecté en parallèle aux secondes bornes de sortie (30c) du second convertisseur (30).

2. Variateur de vitesse selon la revendication 1, **caractérisé en ce que** le module de stockage d'énergie électrique comporte un ou plusieurs super-condensateurs (Cs).

3. Variateur de vitesse selon la revendication 1, **caractérisé en ce que** le module de stockage d'énergie électrique comporte un ou plusieurs super-condensateurs (Cs) en série avec une inductance de filtrage (35).

4. Variateur de vitesse selon l'une des revendications 1 à 3, **caractérisé en ce que** le premier convertisseur continu/continu (20) est un convertisseur monodirectionnel non-isolé qui comporte un interrupteur actif (21) et un interrupteur passif (22).

5. Variateur de vitesse selon la revendication 4, **caractérisé en ce que** l'interrupteur passif du premier convertisseur (20) est une diode (22) qui est connectée entre les bornes de sortie (20b) du premier convertisseur (20), et **en ce que** l'ensemble formé par l'interrupteur actif (21) et l'interrupteur passif (22) reliés en série est connecté en parallèle aux bornes d'entrée (20a) du premier convertisseur (20).

6. Variateur de vitesse selon l'une des revendications 1 à 3, **caractérisé en ce que** le second convertisseur continu/continu (30) est un convertisseur bidirectionnel non-isolé qui comporte une cellule de commutation composée de quatre interrupteurs actifs (31, 32, 33, 34) reliés en série entre la ligne positive (16) et la ligne négative (17) du bus continu, la cellule comprenant un point milieu central (P_{MC}) entre le deuxième (32) et le troisième (33) interrupteur actif, un point milieu haut (P_{MH}) entre le troisième (33) et le quatrième (34) interrupteur actif, un point milieu bas (P_{MB}) entre le premier (31) et le deuxième (32) interrupteur actif.

7. Variateur de vitesse selon la revendication 6, **caractérisé en ce que** la ligne positive (16) du bus continu et le point milieu central (P_{MC}) forment les premières bornes de sortie (30b) du second convertisseur (30), et **en ce que** le point milieu haut (P_{MH}) et le point milieu bas (P_{MB}) forment les secondes bornes de sortie (30c) du second convertisseur (30).

8. Variateur de vitesse selon la revendication 7, **caractérisé en ce que** le second convertisseur continu/continu (30) comporte également deux diodes de contrôle de tension (36, 37) montées en série entre la ligne positive (16) du bus continu et le point milieu central (P_{MC}), ainsi qu'une capacité de charge (Cc) reliée en série entre le point milieu bas (P_{MB}) et un point milieu (P_{MD}) des deux diodes de contrôle de tension (36, 37).

9. Variateur de vitesse selon la revendication 1, comportant également un ensemble de filtrage relié entre la ligne positive (16) et la ligne négative (17) du bus continu, l'ensemble de filtrage étant composé de deux capacités (C1, C2) reliées en série, **caractérisé en ce qu'**une des deux capacités (C1) de l'ensemble de filtrage est la capacité de filtrage (Cf).

## Patentansprüche

1. Umrichter, der eine Leistungsversorgungs-Gleichstromsammelschiene, die mit einer positiven Leitung (16) und mit einer negativen Leitung (17) versehen ist, und ein Wechselrichtermodul (14) enthält, das von der Gleichstromsammelschiene versorgt wird, um eine variable Spannung an eine elektrische Last (M) zu liefern, **dadurch gekennzeichnet, dass** der Umrichter aufweist:
- einen ersten Gleichstrom-Gleichstrom-Wandler (20), der Eingangsklemmen (20a) und Ausgangsklemmen (20b) enthält, wobei die Ausgangsklemmen (20b) des ersten Wandlers (20) in der positiven Leitung (16) der Gleichstromsammelschiene in Reihe geschaltet sind,
- einen zweiten Gleichstrom-Gleichstrom-Wandler (30), der Eingangsklemmen (30a), erste Ausgangsklemmen (30b) und zweite Ausgangsklemmen (30c) enthält, wobei die Eingangsklemmen (30a) des zweiten Wandlers (30) zwischen der positiven Leitung (16) und der negativen Leitung (17) der Gleichstromsammelschiene verbunden sind,
- einen Filterkondensator (Cf), der mit den Eingangsklemmen (20a) des ersten Wandlers (20) und mit den ersten Ausgangsklemmen (30b) des zweiten Wandlers (30) parallelgeschaltet ist,
- ein Speichermodul elektrischer Energie (Cs), das mit den zweiten Ausgangsklemmen (30c) des zweiten Wandlers (30) parallelgeschaltet ist.

2. Umrichter nach Anspruch 1, **dadurch gekennzeichnet, dass** das Speichermodul elektrischer Energie einen oder mehrere Superkondensatoren (Cs) aufweist.

3. Umrichter nach Anspruch 1, **dadurch gekennzeichnet, dass** das Speichermodul elektrischer Energie einen oder mehrere Superkondensatoren (Cs) in Reihe mit einer Filterinduktivität (35) aufweist.

4. Umrichter nach einem der Ansprüche 1 bis 3, **dadurch gekennzeichnet, dass** der erste Gleichstrom-Gleichstrom-Wandler (20) ein nicht isolierter monodirektionaler Wandler ist, der einen aktiven Schalter (21) und einen passiven Schalter (22) aufweist.

5. Umrichter nach Anspruch 4, **dadurch gekennzeichnet, dass** der passive Schalter des ersten Wandlers (20) eine Diode (22) ist, die zwischen den Ausgangsklemmen (20b) des ersten Wandlers (20) verbunden ist, und dass die von den in Reihe geschalteten aktiven Schalter (21) und passiven Schalter (22) gebildete Einheit mit den Eingangsklemmen (20a) des ersten Wandlers (20) parallelgeschaltet ist.

6. Umrichter nach einem der Ansprüche 1 bis 3, **dadurch gekennzeichnet, dass** der zweite Gleichstrom-Gleichstrom-Wandler (30) ein nicht isolierter bidirektionaler Wandler ist, der eine Schaltzelle aufweist, die aus vier aktiven Schaltern (31, 32, 33, 34) zusammengesetzt ist, die zwischen der positiven Leitung (16) und der negativen Leitung (17) der Gleichstromsammelschiene in Reihe geschaltet sind, wobei die Zelle einen zentralen Mittelpunkt (P_{MC}) zwischen dem zweiten (32) und dem dritten (33) aktiven Schalter, einen oberen Mittelpunkt (P_{MH}) zwischen dem dritten (33) und dem vierten (34) aktiven Schalter, einen unteren Mittelpunkt (P_{MB}) zwischen dem ersten (31) und dem zweiten (32) aktiven Schalter enthält.

7. Umrichter nach Anspruch 6, **dadurch gekennzeichnet, dass** die positive Leitung (16) der Gleichstromsammelschiene und der zentrale Mittelpunkt (P_{MC}) die ersten Ausgangsklemmen (30b) des zweiten Wandlers (30) bilden, und dass der obere Mittelpunkt (P_{MH}) und der untere Mittelpunkt (P_{MB}) die zweiten Ausgangsklemmen (30c) des zweiten Wandlers (30) bilden.

8. Umrichter nach Anspruch 7, **dadurch gekennzeichnet, dass** der zweite Gleichstrom-Gleichstrom-Wandler (30) ebenfalls zwei Spannungssteuerdioden (36, 37), die zwischen der positiven Leitung (16) der Gleichstromsammelschiene und dem zentralen Mittelpunkt (P_{MC}) in Reihe geschaltet sind, sowie einen Lastkondensator (Cc) aufweist, der zwischen dem unteren Mittelpunkt (P_{MB}) und einem Mittelpunkt (P_{MD}) der zwei Spannungssteuerdioden (36, 37) in Reihe geschaltet ist.

9. Umrichter nach Anspruch 1, der ebenfalls eine zwischen der positiven Leitung (16) und der negativen Leitung (17) der Gleichstromsammelschiene verbundene Filtereinheit aufweist, wobei die Filtereinheit aus zwei in Reihe geschalteten Kondensatoren (C1, C2) besteht, **dadurch gekennzeichnet, dass** einer der zwei Kondensatoren (C1) der Filtereinheit der Filterkondensator (Cf) ist.

## Claims

1. A variable speed drive comprising a DC power supply bus with a positive line (16) and with a negative line (17), and an inverter module (14) supplied by the DC bus so as to provide a variable voltage to an electric load (M), **characterized in that** the variable drive comprises:
- a first DC/DC converter (20) comprising input terminals (20a) and output terminals (20b), the output terminals (20b) of the first converter (20) being connected in series on the positive line (16) of the DC bus,
- a second DC/DC converter (30) comprising input terminals (30a), first output terminals (30b) and second output terminals (30c), the input terminals (30a) of the second converter (30) being connected between the positive line (16) and the negative line (17) of the DC bus,
- a filtering capacitor (Cf) which is connected in parallel to the input terminals (20a) of the first converter (20) and to the first output terminals (30b) of the second converter (30),
- an electrical energy storage module (Cs) which is connected in parallel to the second output terminals (30c) of the second converter (30).

2. The variable speed drive as claimed in claim 1, **characterized in that** the electrical energy storage module comprises one or more super-capacitors (Cs).

3. The variable speed drive as claimed in claim 1, **characterized in that** the electrical energy storage module comprises one or more super-capacitors (Cs) in series with a filtering inductor (35).

4. The variable speed drive as claimed in one of claims 1 to 3, **characterized in that** the first DC/DC converter (20) is a non-isolated monodirectional converter which comprises an active switch (21) and a passive switch (22).

5. The variable speed drive as claimed in claim 4, **characterized in that** the passive switch of the first converter (20) is a diode (22) which is connected between the output terminals (20b) of the first converter (20), and **in that** the assembly formed by the active switch (21) and the passive switch (22) linked in series is connected in parallel to the input terminals (20a) of the first converter (20).

6. The variable speed drive as claimed in one of claims 1 to 3, **characterized in that** the second DC/DC converter (30) is a non-isolated bidirectional converter which comprises a switching cell composed of four active switches (31, 32, 33, 34) linked in series between the positive line (16) and the negative line (17) of the DC bus, the cell comprising a central mid-point (P_{MC}) between the second (32) and the third (33) active switch, a high mid-point (P_{MH}) between the third (33) and the fourth (34) active switch, and a low mid-point (P_{MB}) between the first (31) and the second (32) active switch.

7. The variable speed drive as claimed in claim 6, **characterized in that** the positive line (16) of the DC bus and the central mid-point (P_{MC}) form the first output terminals (30b) of the second converter (30), and **in that** the high mid-point (P_{MH}) and the low mid-point (P_{MB}) form the second output terminals (30c) of the second converter (30).

8. The variable speed drive as claimed in claim 7, **characterized in that** the second DC/DC converter (30) also comprises two voltage control diodes (36, 37) mounted in series between the positive line (16) of the DC bus and the central mid-point (P_{MC}), as well as a load capacitor (Cc) linked in series between the low mid-point (P_{MB}) and a mid-point (P_{MD}) of the two voltage control diodes (36, 37).

9. The variable speed drive as claimed in claim 1, also comprising a filtering assembly linked between the positive line (16) and the negative line (17) of the DC bus, the filtering assembly being composed of two capacitors (C1, C2) linked in series, **characterized in that** one of the two capacitors (C1) of the filtering assembly is the filtering capacitor (Cf).
